Europäisches Patentamt

European Patent Office

Office européen des brevets

(19)

(11) Veröffentlichungsnummer: **0 030 517**
**A1**

(12) # EUROPÄISCHE PATENTANMELDUNG

(21) Anmeldenummer: 80810040.8

(22) Anmeldetag: 04.02.80

(51) Int. Cl.³: **B 01 F 5/06**, A 01 J 15/12,
A 01 J 15/14

(30) Priorität: 07.12.79 CH 10895/79

(43) Veröffentlichungstag der Anmeldung: 17.06.81
Patentblatt 81/24

(84) Benannte Vertragsstaaten: **AT BE CH DE FR GB IT LU
NL SE**

(71) Anmelder: **Amacher, Paul, Industriestrasse 10,
CH-8117 Fällanden (Zürich) (CH)**

(72) Erfinder: **Amacher, Paul, Industriestrasse 10,
CH-8117 Fällanden (Zürich) (CH)**

(74) Vertreter: **Bovard, Fritz Albert et al, Bovard & Cie
Patentanwälte VSP Optingenstrasse 16,
CH-3000 Bern 25 (CH)**

(54) **Vorrichtung zur Behandlung von Flüssigkeit mit Gas.**

(57) Die Vorrichtung enthält eine rohrförmige Säule (1), an welche in Bereichen ihrer Abdeckplatten (20, 21) eine Durchflußleitung (7) angeschlossen ist. An die Durchflußleitung (7) ist mit Vorteil eine Flasche (11) mit komprimiertem Gas angeschlossen, das über die Durchflußleitung (7) in die Säule (1) unter Druck zugeführt wird. Die in die Säule (1) eingeführte Rohmilch wird durch den Gasdruck entlang der durch die Säule (1) und die angeschlossene Durchflußleitung (7) gebildete Einweg-Kreisumlaufbahn in Zirkulation gebracht. In der Säule (1) befindet sich ein Mantel (5) mit Hohlkopf und ein von ihm in Abstand liegender hohler Kugeltrichter (6), die die Rohmilch mit dem Gas zwangsläufig durchfließt, wobei sie zerstäubt und in eine zentripetale Wirbelbewegung gesetzt wird.

0030517

## Vorrichtung zur Behandlung von Flüssigkeit mit Gas

Die Erfindung betrifft eine Vorrichtung zur Behandlung von Flüssigkeit mit Gas, mit einer aus mindestens einem rohrförmigen Teil bestehenden Säule mit einem Einlass- und einem Ablassstutzen für die Flüssigkeit, welche Stutzen in den gegenüberliegenden Abdeckplatten der Säule abschliessbar angeordnet sind, wobei in der Säule mindestens ein Mantel mit Hohlkopf, welcher Mantel Einstiche mit Eintrittsdüsen zum Durchfluss der Flüssigkeit und des Gases durch denselben aufweist, und mindestens ein im Abstand von dem Mantel mit Hohlkopf liegender hohler Kugeltrichter mit einer Eintrittsöffnung zum Durchfluss der Flüssigkeit und des Gases durch denselben dichtend eingebaut sind.

Die Erfindung betrifft auch eine Vorrichtung, die im Oberbegriff des Patentanspruches 7 beschrieben ist.

Butter wird aus Butterfett gewonnen, das in Rohmilch und insbesondere im Rahm in der Form von winzigen Tröpfchen enthalten ist. Aus dem Rahm, der um etwa zehn Mal mehr Butterfett enthält als Milch selbst, wird Butter ausgebuttert. Wenn der Rahm bei einer bestimmten Temperatur schnell gerührt oder geschlagen wird, bilden sich aus den Tröpfchen des Butterfetts Teilchen aus, die Butterfettkügelchen genannt werden. Durch weiteres Verbuttern der Butterfettkügelchen wird Butter erhalten.

Vor dem Ausbuttern muss aber der Rahm in Lagerbehältern über mehrere Stunden bei einer Temperatur von etwa $4^{\circ} - 10^{\circ}$ C aufbewahrt werden. Während dieser Lagerung unterliegt der Rahm einem Prozess, der Milderungs- oder Reifungsprozess genannt wird, infolge dessen der Rahm leichter ausgebuttert werden kann.

In einem kontinuierlichen Verfahren wird der Rahm mit rasch rotierenden Schlägern ausgebuttert. Dabei entsteht ein Gemisch von Butterfettkügelchen und einer Milchflüssigkeit, die als Buttermilch bekannt ist (Magermilch). Durch die Schläger wird aus dem Rahm Butter in etwa 3 Minuten gewonnen. Mit diesen Mitteln wird Butter in einem ununterbrochenen Rhythmus hergestellt - im Gegenteil zu den üblichen Mitteln, mittels welcher nur eine gewisse Menge in einer bestimmten Zeitspanne hergestellt werden kann.

Es ist auch bekannt, das Ausbuttern des Rahmes in grossen Trommeln aus rostfreiem Stahl vorzunehmen. Jede Trommel, die nur höchstens bis zur Hälfte ihres Volumens gefüllt wird, wird für etwa 30 bis 45 Minuten in Drehbewegung gesetzt. Somit entstehen Butterfettkügelchen und Buttermilch (Magermilch), die abgelassen wird. In einer Trommel dieser Art kann bis 3860 kg Butter auf einmal hergestellt werden.

Nachteile dieser bekannten Methoden und Mittel sind wie folgt:

Die Rohmilch muss zuerst entrahmt werden, wonach der Rahm für eine bestimmte Zeit und bei einer gewissen Temperatur gelagert werden muss. Schon dazu braucht man verschiedene Geräte bzw. Lagerbehälter, die kostspielig sind, weil sie meistens aus rostfreiem Stahl hergestellt sind. Zum Verbuttern des Rahmes braucht man entweder Butterfertiger, die um ihre Achse gedreht werden müssen, oder rasch rotierende Schläger, welche beide ebenfalls kostspielig und schadenanfällig sind; dabei ist der Verbrauch der elektrischen Energie auch ziemlich gross. Nachträglich müssen die gewonnenen Butterkügelchen unter Knetung abgekühlt werden.

Im Schweizer Patentgesuch 3538/79 ist eine Säule zur Anreicherung einer Flüssigkeit mit Gas beschrieben, wobei die Flüssigkeit gespalten wird. In der aus mindestens einem rohrförmigen Teil bestehenden Säule, die die unter Druck stehende Flüssigkeit und das Gas durchfliessen, ist mindestens ein Mantel mit Hohlkopf und ein in Abstand von demselben angeordneter, hohler Kugeltrichter dichtend eingebaut, durch welche beide hindurch die Flüssigkeit und das Gas zwangsläufig fliessen, wobei die Flüssigkeit zerstäubt bzw. in eine zentripetale Wirbelbewegung gesetzt wird.

Zur Gewinnung von Butter aus Rohmilch kann die Säule nach diesem Schweizer Patentgesuch mit einigen Modifikationen als Teil der Vorrichtung verwendet werden.

Es ist die Aufgabe der Erfindung, eine Vorrichtung zur Behandlung von Flüssigkeit mit Gas, insbesondere dann zu einer solchen Behandlung, bei welcher aus Rohmilch Butter gewonnen wird, zu schaffen, in welcher Butter in etwa der gleichen Zeit wie mit den herkömmlichen Mitteln hergestellt wird. Die Handhabung einer solchen Vorrichtung soll einfach sein, sie soll nur wenige Bestandteile aufweisen, die nicht motorisch angetrieben sind. Die Herstellungskosten einer solchen Vorrichtung sollen niedrig gehalten werden. Die in der Vorrichtung erzeugte Buttermenge soll über der normalen Quantität der konventionellen Art der Gewinnung liegen. Die in der Vorrichtung hergestellte Butter soll aus derselben leicht entnehmbar sein. Durch die Vorrichtung soll der ganze Prozess der Gewinnung von Butter aus Rohmilch sehr wesentlich verkürzt werden.

Diese Aufgaben werden bei der eingangs erwähnten Vorrichtung auf solche Weise gelöst, dass an die Säule in Bereichen ihrer Abdeckplatten eine Durchflussleitung angeschlossen ist, die gemeinsam mit der Säule eine Einweg-Kreislaufbahn bildet, in welche in Richtung des Durchflusses der Flüssigkeit Gas unter Druck einführbar ist.

Mit Vorteil kann an die Durchflussleitung der Vorrichtung über ein Druckreduzierventil wenigstens eine Flasche mit komprimiertem Gas angeschlossen sein, welches Gas in den dem Einlassstutzen naheliegenden Innenraum der Säule zuführbar ist, um die anfänglich in die Säule eingelassene Flüssigkeit entlang der Kreisumlaufbahn in Zirkulation zu bringen.

Der Erfindungsgegenstand wird nachstehend anhand der Zeichnung beispielsweise näher erläutert. Es zeigen

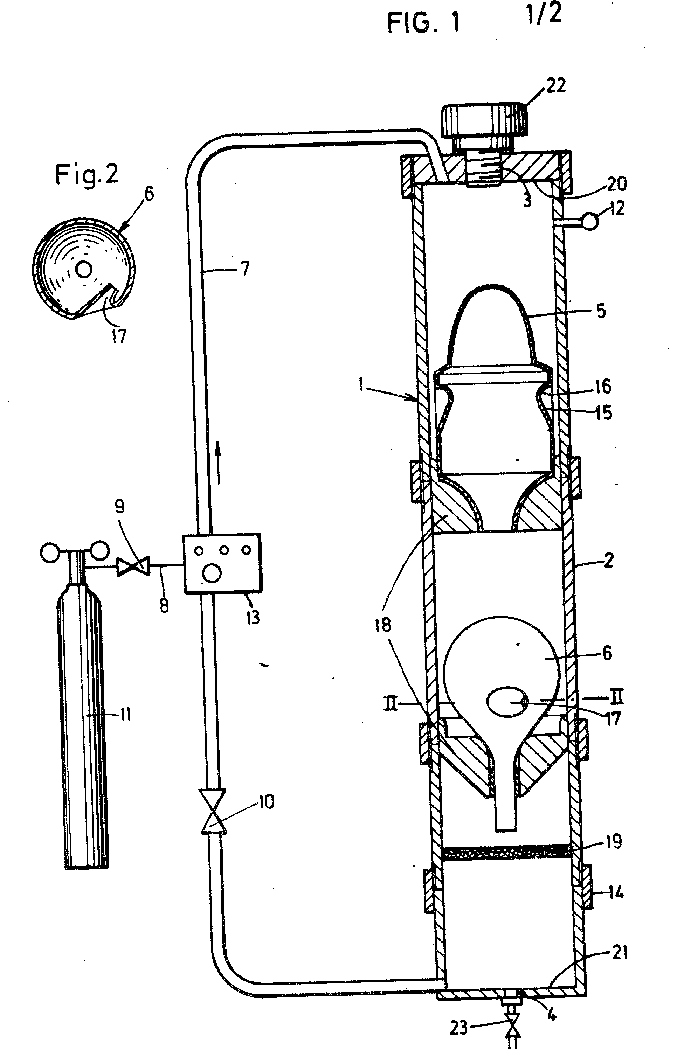

Fig. 1 einen Längsschnitt einer vertikalen Säule der Vorrichtung mit einer an die Säule angeschlossenen Durchflussleitung und

Fig. 2 einen Schnitt durch die Kugel des in der Säule eingebauten hohlen Kugeltrichters entlang der Linie II - II der Fig. 1,

Fig. 3 einen Längsschnitt einer anderen Ausführungsform der Vorrichtung.

Die Vorrichtung umfasst eine vertikale Säule 1, die aus mehreren rohrförmigen Teilen 2 besteht, die an seinen Endteilen mit Aussengewinden versehen sind, über welche Ringe 14 mit Innengewinde angeordnet sind. Durch jeweils einen Ring werden zwei benachbarte Teile 2 dichtend zusammengeschraubt.

Die Säule 1 kann auch nur aus einem einzigen rohrförmigen Teil 2 bestehen und eine andere als vertikale Lage einnehmen. Die rohrförmigen Teile 2 können aus verschiedenen Materialien hergestellt sein und verschiedene Durchmesser aufweisen. Dies hängt von der Art und den Mengen der zu behandelnden Medien ab.

Die Säule 1 ist an ihren Enden mit Abdeckplatten 20, 21 abgeschlossen. In der einen Abdeckplatte 20 ist ein Einlassstutzen 3 für die Flüssigkeit, in diesem Falle Rohmilch, eingebaut, der von einer Verschlussschraube 22 gasdicht abschliessbar ist. Durch den Einlassstutzen 3 wird in die Säule etwa zu 4/5 ihres Volumens Rohmilch eingeführt. In der Abdeckplatte 21 auf dem anderen Ende der Säule 1 ist ein Ablassstutzen 4 eingebaut, der mittels eines Ablassventils 23 gasdicht abschliessbar ist.

In jedem rohrförmigen Teil 2 der Säule befindet sich entweder ein Mantel 5 mit Hohlkopf oder ein Hohlkugeltrichter 6. Beide sind aus Glas oder einem rostfreien Stahl hergestellt; sie weisen eine glatte Oberfläche auf. Der Mantel 5 mit dem Hohlkopf sowie der hohle Kugeltrichter 6 sind in der vertikalen Säule hintereinandergereiht, wobei der hohle Kugeltrichter 6
in Richtung des Durchflusses der Flüssigkeit durch die
Säule 1 hinter dem Mantel 5 mit Hohlkopf angeordnet ist.
Beide sind in Haltern 18 eingesetzt, die an der Innenwand
der Säule 1 dichtend befestigt sind.

Der Mantel 5 ist an seiner Aussenseite mit mehreren
Einstichen 15 versehen, die einen Rechts- oder Linksdrall
oder Kombination der beiden Dralle besitzen. Im breiteren
Oberteil jedes Einstiches 15 ist eine Eintrittsdüse 16
für die Flüssigkeit und das Gas vorgesehen. Durch die
entsprechende Anordnung der Einstiche 15 kann die Strömungsrichtung der Flüssigkeit und des Gases bei ihrem
Eintritt in den Innenraum des Mantels 5 und seines Hohlkopfes bestimmt werden. Die Kugel des hohlen Kugeltrichters 6 ist in der vertikalen Säule 1 nach oben gerichtet
und im Abstand von der Mündung des Mantels 5 angeordnet.
Der Trichter des hohlen Kugeltrichters 6 weist in Richtung nach unten. Die Kugel weist eine Eintrittsöffnung
17 für die Flüssigkeit und das Gas auf, die in den Innenraum der Kugel führt. Diese Eintrittsöffnung 17 ist etwa
in tangentialer Richtung zur Längsachse des Kugeltrichters 6 gelegt. Durch ihre Ausrichtung wird der in die
Kugel eintretenden Flüssigkeit und dem Gas die verlangte
Strömungsrichtung gegeben. Die Eintrittsöffnung 17 kann
einen rechten oder linken Drall besitzen, so dass der
Flüssigkeit mit Gas in der Kugel eine zentripetale
Wirbelbewegung im Uhrzeiger- oder im Gegenuhrzeigersinn
erteilt wird.

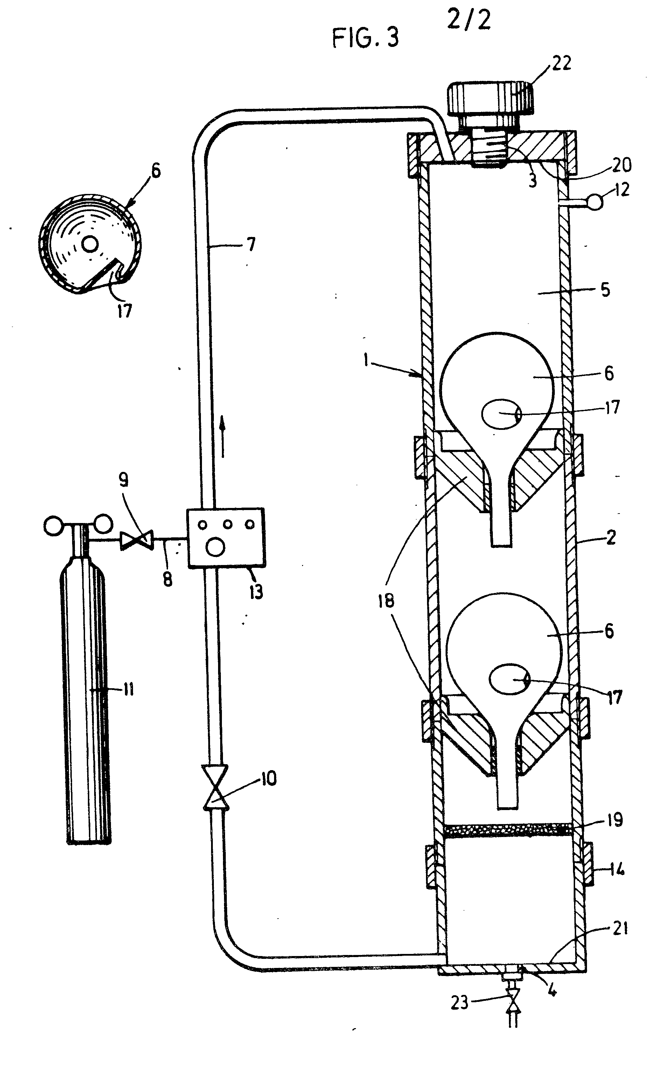

Der Mantel 5 mit Einstichen 15 kann durch einen
Kugeltrichter 6 ersetzt werden, so dass in der Säule 1
wie aus der Fig. 3 ersichtlich ist, zwei hintereinander
angeordnete Kugeltrichter 6 dichtend eingebaut sind. Es
ist durchaus denkbar, dass anstelle von zwei oder mehreren Kugeltrichtern nur deren ein einziger vorgesehen ist.

An die Säule 1 ist in Bereichen ihrer Abdeckplatten 20, 21 eine Durchflussleitung 7 angeschlossen, die
gemeinsam mit der Säule eine geschlossene Einweg-Kreislaufbahn bildet. An die Durchflussleitung 7 ist eine Gaszufuhrleitung 8 einer Flasche 11 mit komprimiertem Gas angeschlossen. Es können auch mehrere Flaschen mit Gasen angeschlossen sein. In diesem Falle ist das Gas ein Gemisch von Kohlendioxyd und Sauerstoff, die vorteilhaft im Verhältnis 2:1 gemischt wurden. Das Gemisch wird in die Durchflussleitung 7 über ein Druckreduzierventil 9 zugeführt. Das unter Druck stehende Gasgemisch wird weiter über die Durchflussleitung 7 in den dem Einlassstutzen 3 naheliegenden Innenraum der Säule 1 zugeführt. In diesem Raum wird Druck aufgebaut, durch welchen die in die Säule anfänglich eingelassene Rohmilch in Richtung des Mantels 5 mit Hohlkopf, des hohlen Kugeltrichters 6 bzw. des ersten und des zweiten hohlen Kugeltrichters und eines in der Durchflussleitung 7 zwischen der Gaszufuhrleitung 8 und der Säule 1 eingebauten Einwegventil 10 entlang der Kreisumlaufbahn in Zirkulation gebracht wird.

An der Gaszufuhrleitung 8 ist eine Kontrolleinheit 13 zur Ueberwachung der aus der Flasche 11 zugeführten Gaseinlassmenge angeschlossen. Auf dieser Kontrolleinheit wird auch die Zeit eingestellt, während welcher das Gasgemisch in die Kreisumlaufbahn zugeführt wird. Die Rohmilch mit dem Gasgemisch zirkuliert in der Kreisumlaufbahn etwa 3 bis 5 Minuten. Für grössere Vorrichtungen, in welchen eine grössere Menge von Rohmilch verarbeitet wird, wird an die Durchflussleitung 7 eine nicht dargestellte Förderpumpe angeschlossen.

An der Säule 1 ist ein Manometer 12 angeordnet, das zur Messung des im Innenraum der Säule 1 in der Nähe des Einlassstutzens 3 anfänglich herrschenden Gasdruckes bestimmt ist. In der Säule 1 ist weiter zwischen dem hohlen Kugeltrichter 6 und dem Ablassstutzen 4 ein engmaschiges Sieb 19 eingebaut, das aus Drahtgeflecht mit synthetischer Einlage besteht.

Der Ablauf des Gewinnungsprozesses von Butter aus Rohmilch ist wie folgt:

Die Säule 1 wird zu etwa 4/5 ihres Volumens durch den Einlassstutzen 3 mit Rohmilch gefüllt, wonach der Einlassstutzen 3 mit der Verschlussschraube 22 hermetisch verschlossen wird. Ueber die Durchflussleitung 7 wird in den dem Einlassstutzen 3 naheliegenden Innenraum in der Säule 1 Gemisch von Kohlendioxyd und Sauerstoff eingeführt. Das Gemisch wird so lange in den Innenraum eingeleitet, bis das Manometer 12 den benötigten Druck anzeigt. Durch den aufgebauten Druck wird die Rohmilch in einer Richtung, nämlich über den Mantel 5 mit Hohlkopf, über den hohlen Kugeltrichter 6 und das Einwegventil 10 in Zirkulation gebracht. Bei grösseren Rohmilchquantitäten wird, wie oben erwähnt, eine zusätzliche Förderpumpe angeschlossen. In die Kreisumlaufbahn wird über eine Zeitspanne von 3 bis 5 Minuten soviel Gasgemisch nachgeführt, dass die Zirkulation der Rohmilch über diese Zeitspanne aufrecht erhalten bleibt. Durch das zwangsläufige Durchfliessen des Mantels 5 mit Hohlkopf, in welchem die Rohmilch zerstäubt, und des Kugeltrichters 6, in welchem die Rohmilch in eine zentripetale Wirbelbewegung gesetzt wird, bzw. des ersten und des zweiten Kugeltrichters, erfolgt eine wirkungsvolle Durchmischung der Rohmilchmoleküle mit dem Gasgemisch. Die gemessene Anreicherung der Rohmilch mit dem Gasgemisch beträgt bis zu 100%.

Nach einem mehrmaligen Durchlauf entlang der Kreisumlaufbahn findet die Butterfettausscheidung statt. Die Butterfettflocken werden von der übrigen Milch durch den Filter 19 getrennt. Die Butterfettflocken werden auf dem Sieb angesammelt, wobei die restliche Milch, die sich jedoch zunehmend in einem Zustand der reinsten Magermilch befindet, durch das Sieb durchfliesst und in eine weitere Zirkulation entlang der Kreisumlaufbahn gerät. Vor der Butterentnahme aus der durch das Filter gebildeten Kammer muss der Gasgemischdruck abgestellt und die Magermilch durch den Ablassstutzen 4 abgelassen werden.

Die Wiederinbetriebnahme der Vorrichtung erfolgt durch das neuerliche Einsetzen des gereinigten Filters 19, wonach die Säule 1 und die Durchflussleitung 7 mit Wasser durchspült wird und frische Rohmilch in die Säule 1 eingelassen wird.

Die Spaltung von Rohmilch in der oben beschriebenen Vorrichtung zu Butterfett und Magermilch erfolgt ohne Anwendung von elektrischer Energie und ohne den Umweg über die übliche Entrahmung von Rohmilch, Lagerung von Rahm, seine "Temperierung" usw. Es handelt sich also um eine einstufige Extraktion von Rohmilch zu Butter ohne Energieaufwand. Durch die Butterfettausscheidung wird der Buttergehalt der gewonnenen Butter erhöht, weil durch die anhaltende Zirkulation von Rohmilch bzw. Milch-Wasserflüssigkeit und im Zusammenspiel der Gasgemische die Milchmoleküle optimal gespalten werden. Die erzeugte Buttermenge liegt deutlich über der normalen Quantität (um etwa 20% bis 30% mehr) der konventionellen Art der Gewinnung. Die applizierten Gase sind lebensmittelkonform und physiologisch unbedenklich.

Die oben beschriebene Vorrichtung kann als einfach bedienbares Haushaltgerät für kleinere Mengen von Rohmilch (z.B. 3 Liter) verwendet werden. Sie wird aber auch als grössere Anlage für mehrfache Rohmilchmengen in z.B. landwirtschaftlichen Genossenschaften zum Einsatz kommen.

Die oben beschriebene Vorrichtung kann auch für andere Zwecke, so wie z.B. zur Anreicherung von Trinkwasser mit Sauerstoff, verwendet werden.

0030517

PATENTANSPRUECHE

1. Vorrichtung zur Behandlung von Flüssigkeit mit Gas, mit einer aus mindestens einem rohrförmigen Teil (2) bestehenden Säule (1) mit einem Einlass- (3) und einem Ablassstutzen (4) für die Flüssigkeit, welche Stutzen in den gegenüberliegenden Abdeckplatten (20, 21) der Säule (1) abschliessbar angeordnet sind, wobei in der Säule mindestens ein Mantel (5) mit Hohlkopf, welcher Mantel Einstiche (15) mit Eintrittsdüsen (16) zum Durchfluss der Flüssigkeit und des Gases durch denselben aufweist, und mindestens ein im Abstand von dem Mantel (5) mit Hohlkopf liegender hohler Kugeltrichter (6) mit einer Eintrittsöffnung (17) zum Durchfluss der Flüssigkeit und des Gases durch denselben dichtend eingebaut sind, dadurch gekennzeichnet, dass an die Säule (1) in Bereichen ihrer Abdeckplatten (20, 21) eine Durchflussleitung (7) angeschlossen ist, die gemeinsam mit der Säule (1) eine Einweg-Kreislaufbahn bildet, in welche in Richtung des Durchflusses der Flüssigkeit Gas unter Druck einführbar ist.

2. Vorrichtung nach Patentanspruch 1, dadurch gekennzeichnet, dass an der Durchflussleitung (7) über ein Druckreduzierventil (9) eine Gaszufuhrleitung (8) wenigstens einer Flasche (11) mit komprimiertem Gas angeschlossen ist, welches Gas in den dem Einlassstutzen (3) naheliegenden Innenraum der Säule (1) zuführbar ist, um die anfänglich in die Säule eingelassene Flüssigkeit entlang der Kreisumlaufbahn in Zirkulation zu bringen.

3. Vorrichtung nach Patentanspruch 2, dadurch gekennzeichnet, dass an der Gaszufuhrleitung (8) eine Kontrolleinheit (13) zur Ueberwachung der aus der Flasche (11) zugeführten Gaseinlassmenge angeschlossen ist.

4. Vorrichtung nach Patentanspruch 2, dadurch gekennzeichnet, dass an der Säule (1) ein Manometer (12) zur Messung des im Innenraum der Säule (1) in der Nähe des Einlassstutzens (3) herrschenden Gasdruckes vorgesehen ist.

5. Vorrichtung nach Patentanspruch 2, dadurch gekennzeichnet, dass in der Durchflussleitung (7) zwischen der Gaszufuhrleitung (8) und der Säule (1) ein Einwegventil (10) eingebaut ist.

6. Vorrichtung nach Patentanspruch 2, dadurch gekennzeichnet, dass in der Säule (1) zwischen dem hohlen Kugeltrichter (6) und dem Ablassstutzen (4) ein engmaschiges Sieb (19) eingebaut ist.

7. Vorrichtung zur Behandlung von Flüssigkeit mit Gas, mit einer aus mindestens einem rohrförmigen Teil (2) bestehenden Säule (1) mit einem Einlass- (3) und einem Ablassstutzen (4) für die Flüssigkeit, welche Stutzen in den gegenüberliegenden Abdeckplatten (20, 21) der Säule (1) abschliessbar angeordnet sind, wobei in der Säule ein oder mehrere hintereinander angeordnete hohle Kugeltrichter mit Eintrittsöffnungen (17) zum Durchfluss der Flüssigkeit und des Gases durch dieselben dichtend eingebaut sind, dadurch gekennzeichnet, dass an die Säule (1) in Bereichen ihrer Abdeckplatten (20, 21) eine Durchflussleitung (7) angeschlossen ist, die gemeinsam mit der Säule (1) eine Einweg-Kreislaufbahn bildet, in welche in Richtung des Durchflusses der Flüssigkeit Gas unter Druck einführbar ist.

0030517

FIG. 1    1/2

Fig.2

FIG. 3

0030517

Nummer der Anmeldung

EP 80 81 0040

Europäisches
Patentamt

**EUROPÄISCHER RECHERCHENBERICHT**

| | EINSCHLÄGIGE DOKUMENTE | | KLASSIFIKATION DER ANMELDUNG (Int. Cl. ⁴) |
|---|---|---|---|
| Kategorie | Kennzeichnung des Dokuments mit Angabe, soweit erforderlich, der maßgeblichen Teile | betrifft Anspruch | |
| DE | <u>EP - A - 0 018 322</u> (P. AMACHER)<br>* Seiten 13,14; Ansprüche 1-10; Figuren 1-7 *<br><br>-- | 1,6,7 | B 01 F  5/06<br>A 01 J 15/12<br>       15/14 |
| | <u>FR - A - 865 787</u> (M.J. SENN)<br>* Seite 5, Zeilen 58-97; Figur 9 *<br><br>-- | 1 | |
| | <u>US - A - 2 293 577</u> (L.V. TOWT, L.O. OTT)<br>* Seite 2, Spalte 1, Zeilen 31-47 *<br><br>-- | 1 | RECHERCHIERTE SACHGEBIETE (Int. Cl. ³)<br><br>A 01 J<br>B 01 F<br>B 03 D<br>A 23 C |
| | <u>DE - C - 633 231</u> (F.D. WIDMER)<br>* Seite 1, Zeilen 10-21; Seite 1, Zeile 61 bis Seite 2, Zeile 30; Figur 1 *<br><br>-- | 1-4 | |
| | <u>FR - A - 744 584</u> (M.P. FEREMUTSCH)<br>* Seite 3, Zeile 103 bis Seite 4, Zeile 7; Figur 2 *<br><br>-- | 1-4 | KATEGORIE DER GENANNTEN DOKUMENTE |
| | <u>DE - C - 224 574</u> (C.A. CARLSON)<br>* Seite 1, Zeilen 26-34; Figur 1 *<br><br>-- | 5 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze |
| A | <u>US - A - 4 087 862</u> (H.C. TSIEN) | | E: kollidierende Anmeldung |
| A | <u>DE - A - 2 812 105</u> (KLOCKNER-HUMBOLDT-DEUTZ AG)<br>./. | | D: in der Anmeldung angeführtes Dokument<br>L: aus andern Gründen angeführtes Dokument<br>&: Mitglied der gleichen Patent-familie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 10-02-1981 | NEHRDICK |

EPA form 1503.1  06.78

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| A | US - A - 3 994 480 (B.H. TOTHER-GILL, H. EARLE, W.J. KELLY) | | |
| A | FR - A - 835 696 (CENTRIFIX CORP.) | | |

---

RECHERCHIERTE SACHGEBIETE (Int. Cl.³)